# EUROPEAN PATENT APPLICATION

(11) **EP 2 685 714 A2**
(43) Date of publication of application: **15.01.2014**
(21) Application number: 12754395.7
(22) Date of filing: 09.03.2012
(51) Int. Cl.: H04N 7/08, H04N 13/00

(54) **METHOD AND DEVICE FOR TRANSMITTING/RECEIVING NON-REAL-TIME STEREOSCOPIC BROADCASTING SERVICE**

(30) Priority: 10.03.2011 KR 20110021552; 09.03.2012 KR 20120024672
(71) Applicant: Electronics And Telecommunications Research Institute, Daejeon-si 305-700 (KR)
(72) Inventor: YIM, Hyun Jeong, Seoul 140-868 (KR); JUNG, Kwanghee, Namyangju-si Gyeonggi-do 472-887 (KR); KWON, Hyoung Jin, Cheongju-si Chungbuk 361-741 (KR); LEE, Gwang Soon, Daejeon-si 305-747 (KR); YUN, Kug Jin, Daejeon-si 305-759 (KR); CHEONG, Won Sik, Daejeon-si 305-761 (KR); HUR, Nam Ho, Daejeon-si 305-768 (KR)
(74) Representative: Betten & Resch
(86) International application number: PCT/KR2012/001761
(87) International publication number: WO 2012/121571

(57) **Abstract**

Disclosed are an apparatus and a method for transmitting a broadcasting service capable of signaling non-real-time 3D broadcasting content. An apparatus for transmitting a broadcasting service includes: a non-real-time (NRT) content encoder encoding stereoscopic image content including a reference image and an additional image to generate an NRT stream; an NRT signaling information encoder generating NRT signaling information including at least one of a service map table (SMT) and a non-real-time-information table (NRT-IT) that correspond to the content; and a multiplexer multiplexing the NRT stream and the NRT signaling information and transmitting the multiplexed NRT stream and NRT signaling information to a receiving apparatus. Therefore, content can be provided even when the reference image and the additional image are encoded into the single file format in the dual stream type.

## Description

### [Technical Field]

The present invention relates to an apparatus and a method for transmitting and receiving broadcasting, and more particularly, to an apparatus and a method for transmitting and receiving a non-real-time stereoscopic broadcasting service.

### [Background Art]

A demand for on-demand that stores content in a receiving apparatus through a broadcasting network for a viewer to watch the content at a desired time has been increased. Therefore, an advanced television systems committee (ATSC) that is one of digital broadcasting standards provides a non-real-time (NRT) mechanism that uses existing broadcasting standards to previously download broadcasting content to a terminal device and then, provides application services at any time. The ATSC NRT can use file delivery over unidirectional transport (FLUTE) standard that splits and transmits large-capacity files in a unidirectional network and transmits NRT broadcasting content to a receiving apparatus based on IP.

The ATSC NRT uses a specific IP address and a port number (224.0.23.60:4937) called a service signaling channel (SSC) for signaling broadcasting content transmitted through a FLUTE protocol. In this case, the ATSC NRT can use the SSC to transmit special tables such as a service map table (SMT) and a non-real-time-information table (NRT-IT).

The SMT may include FLUTE session information (transport session identification (TSI), IP address, UDP port number, or the like) for acquire an NRT service, a service ID for being linked with the NRT-IT, a consumption model, and information such as capability capable of determining whether a receiving apparatus can represent a service.

The NRT-IT is used to inform a terminal of various types of information regarding each content item that can be downloaded and may define download valid time, a corresponding content size, a corresponding content item, content_linkage for information related with files transmitted to the FLUTE, or the like.

However, the current ATSC NRT standard includes content for serving only 2D broadcasting content in non-real-time and is inappropriate for providing a 3D broadcasting service. Therefore, the ATSC specifies a need for a method that can signal file formats and 3D content for transmitting 3D stereoscopic content in the next version, that is, an NRT 2.0 requirement document so as to serve the 3D broadcasting content. Therefore, standardization for a signaling method and a file format is being performed.

As the related art for providing an NRT based 3D broadcasting service, there is a method for configuring a reference image and an additional image, respectively, as separate files and transmitting the reference and additional images in non-real-time so as to provide the 3D broadcasting service. However, the related art describes a method for splitting and transmitting NRT-encoded packets (files) into a reference image packet (file) and an additional image packet (file) but does not describes a method for transmitting and serving the reference image and the additional image configured as a single file format in a dual stream type in non-real-time.

### [Related Art Document]

### [Patent Document]

(Patent Document 1) Korean Patent No. 10-0905723 ("Non-Real-Time Based Digital Three-Dimensional Broadcast Transmitting and Receiving System and Method" (Electronics And Telecommunications Research Institute, Publication Date: June, 12 2008)

### [Disclosure]

### [Technical Problem]

The present invention provides a transmitting apparatus and a transmitting method for signaling non-real-time 3D broadcasting content so as to provide stereoscopic images in non-real-time by configuring a reference image and an additional image as a single file format in a dual stream type while allowing the existing 2D receiving apparatus so as not to receive 3D content.

Further, the present invention provides a receiving apparatus and a receiving method for signaling non-real-time 3D broadcasting content so as to provide stereoscopic images in non-real-time by configuring a reference image and an additional image as a single file format in a dual stream type while allowing the existing 2D receiving apparatus so as not to receive 3D content.

### [Technical Solution]

In an aspect, an apparatus for transmitting a broadcasting service includes: a non-real-time (NRT) content encoder encoding stereoscopic image content including a reference image and an additional image to generate an NRT stream; an NRT signaling information encoder generating NRT signaling information including at least one of a service map table (SMT) and a non-real-time-information table (NRT-IT) that correspond to the content; and a multiplexer multiplexing the NRT stream and the NRT signaling information and transmitting the multiplexed NRT stream and NRT signaling information to a receiving apparatus.

The NRT content encoder may encode the reference image and the additional image into a dual stream type.

The NRT content encoder may encode the content with a file delivery over unidirectional transport (FLUTE) standard.

The NRT signaling information may be generated by including a stereoscopic services category including a service compatible code or a frame compatible coder in capabilities_descriptor.

The NRT signaling information may include a code for signaling 3D content for storing and playing a stereoscopic video.

The NRT signaling information may include PushVoD_SC_descriptor indicating that the content are stereoscopic based content.

The PushVoD_SC_descriptor may include information indicating a scheme of composing the reference image and the additional image of the stereoscopic content.

The PushVoD_SC_descriptor may include information indicating any one of a left image and a right image as the reference image.

The PushVoD_SC_descriptor may include information indicating a track corresponding to the left image when the stereoscopic content are composed of a dual stream type.

In another aspect, a method for transmitting a broadcasting service includes: encoding stereoscopic image content including a reference image and an additional image to generate an NRT stream; generating NRT signaling information including at least one of a service map table (SMT) and a non-real-time-information table (NRT-IT) that correspond to the content; and multiplexing the NRT stream and the NRT signaling information and transmitting the multiplexed NRT stream and NRT signaling information to a receiving apparatus.

In another aspect, an apparatus for receiving a broadcasting service includes: an non-real-time (NRT) decoder decoding a broadcasting signal including an NRT stream and NRT signaling information, to acquire NRT content and the NRT signaling information; and an NRT service controller performing a control to play the NRT content based on the NRT signaling information, wherein the NRT content are stereoscopic NRT content including a reference image and an additional image, and the NRT signaling information includes at least one of a service map table (SMT) and a non-real-time-information table (NRT-IT).

The NRT stream may be generated by encoding the reference image and the additional image into a dual stream type.

The broadcasting signal may be generated by encoding the content with a file delivery over unidirectional transport (FLUTE) standard.

The NRT signaling information may be generated by including a stereoscopic services category including a service compatible code or a frame compatible coder in capabilities_descriptor.

The NRT signaling information may include a code for signaling a stereoscopic video application format (SVAF) for storing and playing a stereoscopic video.

The NRT signaling information may include PushVoD_SC_descriptor indicating that the content are stereoscopic based content.

The PushVoD_SC_descriptor may include information indicating a scheme of composing the reference image and the additional image of the stereoscopic content.

The PushVoD_SC_descriptor may include information indicating any one of a left image and a right image as the reference image.

The PushVoD_SC_descriptor may include information indicating a track corresponding to the left image when the stereoscopic content are composed of a dual stream type.

In another aspect, a method for receiving a broadcasting service includes: decoding a broadcasting signal including a non-real-time (NRT) stream and NRT signaling information to acquire NRT content and the NRT signaling information; and performing a control to play the NRT content based on the NRT signaling information, wherein the NRT content are stereoscopic NRT content including a reference image and an additional image, and the NRT signaling information includes at least one of a service map table (SMT) and a non-real-time-information table (NRT-IT).

### [Advantageous Effects]

According to the apparatus and method for transmitting and receiving an NRT stereoscopic broadcasting service in accordance with the exemplary embodiment of the present invention, the 3D broadcasting service can be provided by simultaneously transmitting the reference image and the additional image in non-real-time. In particular, the exemplary embodiment of the present invention can provide content even when the reference image and the additional image are encoded with the single file format in the dual stream type.

Further, the exemplary embodiments of the present invention can provide the reverse compatibility for the existing apparatuses that is one of the most important technical problems in the ATSC NRT 2.0 by allowing the existing 2D receiving apparatus so as not to receive the 3D content and allowing the 3D receiving apparatus to receive the stereoscopic image.

### [Description of Drawings]

FIG. 1 is a schematic conceptual diagram of a 3D TV broadcasting service using a program stand-alone non-real-time stereoscopic transmission technology.
FIG. 2 is a block diagram showing a configuration of an apparatus for transmitting a non-real-time stereoscopic broadcasting service in accordance with an exemplary embodiment of the present invention.
FIG. 3 is a flow chart of a method for transmitting non-real-time stereoscopic broadcasting service in accordance with the exemplary embodiment of the present invention.
FIG. 4 is a block diagram showing a configuration of an apparatus for receiving a non-real-time stereoscopic broadcasting service in accordance with an exemplary embodiment of the present invention.
FIG. 5 is a flow chart of a method for receiving non-real-time stereoscopic broadcasting service in accordance with the exemplary embodiment of the present invention.
FIG. 6 is a schematic configuration diagram of signaling for providing a 3D NRT service.
FIG. 7 is a flow chart of a method for receiving non-real-time stereoscopic broadcasting service in accordance with the exemplary embodiment of the present invention.

### [Mode for Invention]

Since the present invention may be variously modified and have several exemplary embodiments, specific exemplary embodiments will be shown in the accompanying drawings and be described in detail.

However, it is to be understood that the present invention is not limited to the specific exemplary embodiments, but includes all modifications, equivalents, and substitutions included in the spirit and the scope of the present invention.

In describing exemplary embodiments of the present invention, well-known functions or constructions will not be described in detail since they may unnecessarily obscure the understanding of the present invention.

Terms used in the specification, 'first', 'second', etc. can be used to describe various components, but the components are not to be construed as being limited to the terms. The terms are only used to differentiate one component from other components. For example, the 'first' component may be named the 'second' component and the 'second' component may also be similarly named the 'first' component, without departing from the scope of the present invention. The term 'and/or' includes a combination of a plurality of items or any one of a plurality of terms.

It is to be understood that when one element is referred to as being "connected to" or "coupled to" another element, it may be connected directly to or coupled directly to another element or be connected to or coupled to another element, having the other element intervening therebetween. On the other hand, it is to be understood that when one element is referred to as being "connected directly to" or "coupled directly to" another element, it may be connected to or coupled to another element without the other element intervening therebetween.

Terms used in the present specification are used only in order to describe specific exemplary embodiments rather than limiting the present invention. Singular forms are intended to include plural forms unless the context clearly indicates otherwise. It will be further understood that the terms "comprises" or "have" used in this specification, specify the presence of stated features, steps, operations, components, parts, or a combination thereof, but do not preclude the presence or addition of one or more other features, numerals, steps, operations, components, parts, or a combination thereof.

Furthermore, constitutional parts shown in the embodiments of the present invention are independently shown so as to represent different characteristic functions. Thus, it does not mean that each constitutional part is constituted in a constitutional unit of separated hardware or one software. In other words, each constitutional part includes each of enumerated constitutional parts for convenience of explanation. Thus, at least two constitutional parts of each constitutional part may be combined to form one constitutional part or one constitutional part may be split into a plurality of constitutional parts to perform each function. The embodiment where each constitutional part is combined and the embodiment where one constitutional part is split are also included in the scope of the present invention, if not departing from the essence of the present invention.

Unless indicated otherwise, it is to be understood that all the terms used in the specification including technical and scientific terms has the same meaning as those that are understood by those who skilled in the art. It must be understood that the terms defined by the dictionary are identical with the meanings within the context of the related art, and they should not be ideally or excessively formally defined unless the context clearly dictates otherwise.

Hereinafter, exemplary embodiments of the present invention will be described in more detail with reference to the accompanying drawings. In order to facilitate the general understanding of the present invention in describing the present invention, through the accompanying drawings, the same reference numerals will be used to describe the same components and an overlapped description of the same components will be omitted.

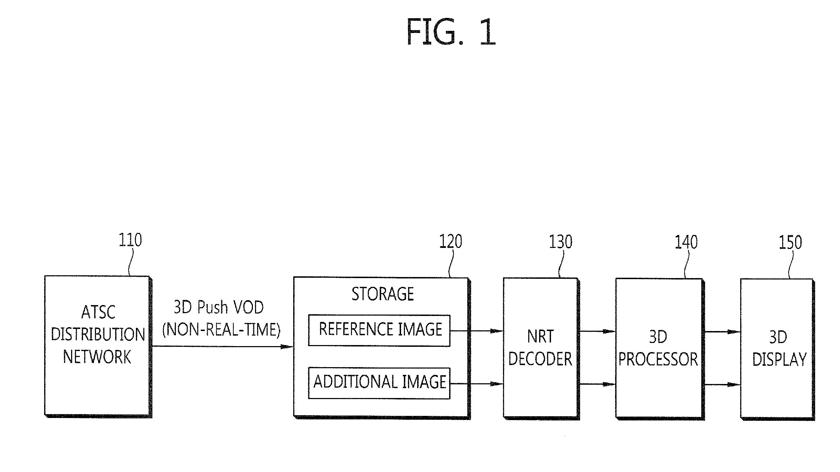

FIG. 1 is a schematic conceptual diagram of a 3D TV broadcasting service using a program stand-alone non-real-time stereoscopic transmission technology.

As shown in FIG. 1, the non-real-time stereoscopic broadcasting service transmission technology provides a 3DTV broadcasting service by simultaneously transmitting reference image and additional image content based on an ATSC NRT transmission mechanism. The exemplary embodiment of present invention extends a 3D file transmission technology capable of providing a stereoscopic service, based on a browse and download transmission technology that is one of service categories of ATSC NRT. At the time of transmitting a 2D digital broadcasting program, a 3D image based on the ATSC NRT standard independently from a program transmitted in real time is previously transmitted and a receiving apparatus stores corresponding content in a storage device and then, provides a 3D stereoscopic image when a viewer selects the 3D stereoscopic image.

Describing in more detail with reference to FIG. 1, an ATSC distribution network 110 transmits reference images and 3D additional images as a non-real-time 3D push VOD service to a storage 120 of the receiving apparatus. An NTR decoder 130 decodes the reference images and the additional images and a 3D display 150 displays 3D images to allow a viewer to view the 3D images through 3D processor 140.

A system for transmitting and receiving a non-real-time stereoscopic broadcasting service may be configured to include a transmitting apparatus that may include a 3D NRT broadcasting unit, an NRT encoder, or the like, and a receiving apparatus that decodes broadcasting content transmitted in real time and non-real-time to provide a 3DTV broadcast service. The 3D NRT broadcasting content may receive and transmit by using a broadcasting network and an Internet network.

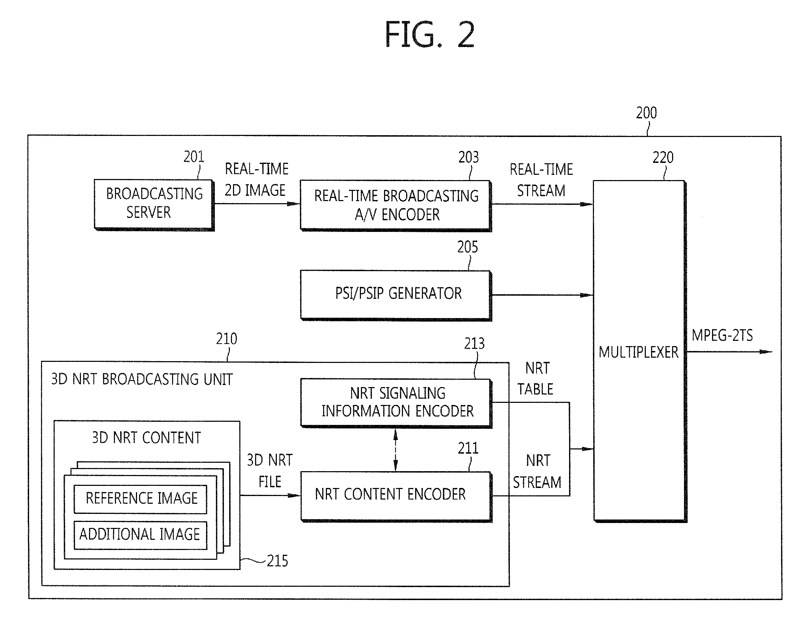

FIG. 2 is a block diagram showing a configuration of an apparatus for transmitting a non-real-time stereoscopic broadcasting service in accordance with an exemplary embodiment of the present invention.

As shown in FIG. 2, an apparatus 200 for transmitting a non-real-time (NRT) stereoscopic broadcasting service in accordance with an exemplary embodiment of the present invention may further include a 3D NRT broadcasting unit 210 for NRT transmission as well as components used for transmitting existing broadcasting.

When a broadcasting server 201 broadcasts 2D images and voice in real time so as to provide the existing real-time images, a real-time broadcasting A/V encoder 203 encodes the real-time 2D images and voice and transmits the encoded 2D images and voice to a multiplexer 220. A PSI/PSIP generator 205 generates PSI or PSIP for transmitting real-time images and transmits the generated PSI or PSIP to the multiplexer 220.

The 3D NRT broadcasting unit 210 may be configured to include a storage 215 that stores and manages 3D NRT broadcasting content, an NRT signaling information encoder 213, and an NRT content encoder 211. The 3D NRT broadcasting unit 210 may prepare a schedule for broadcasting the 3D NRT content and transmit NRT files to the multiplexer according to an NRT content broadcasting schedule. In this case, the 3D NRT content may include reference images and additional images.

The NRT content encoder 211 may encode the content files including the reference images and the additional images based on the NRT. That is, the NRT content encoder 211 may encode stereoscopic (3D) image content including the reference images and the additional images to generate an NRT stream.

In more detail, the NRT content encoder 21 may encode the 3D NRT content stored and managed in the storage 215 of the 3D NRT broadcasting unit 210 with a file delivery over unidirectional transport (FLUTE) standard and generate a DSM-CC addressable section based MPEG-2 TS stream based on the encoded image to transmit the generated stream to the multiplexer 220.

Further, the NRT content encoder 211 may encode the reference image and the additional image into the dual stream type. In addition, the NRT content encoder 211 may encode the dual stream with the single format.

The NRT signaling information encoder 213 may generate the NRT signaling information including at least one of a service map table (SMT) and a non-real-time-information, table (NRT-IT) that correspond to the content.

The NRT signaling information including at least one of the SMT and the NRT-IT is generated in the NRT signaling information encoder 213 and is transmitted to the multiplexer 220 so as to transmit service composition information, content related information, or the like, to a broadcasting receiving apparatus.

The multiplexer 220 may multiplex, channel-encode, and modulate the generated NRT stream and NRT signaling information so as to be transmitted to the receiving apparatus through a broadcasting channel. In this case, the multiplexer 230 may simultaneously multiplex the real-time stream and the PSI or the PSIP.

As described above, the SMT may include a descriptor and information for acquiring the NRT service and the NRT-IT may include a descriptor and information related to individual content that may be received in the receiving apparatus. The transmitting apparatus and the receiving apparatus according to the exemplary embodiment of the present invention transmits and receives the stereoscopic content in non-real-time to transmit and receive the stereoscopic content as described above. In the receiving apparatus, the descriptor and the information for performing signaling related to 3D content (file) access and play, or the like, will be described below in detail. The following descriptor or information, may be included in at least one of the SMT or the NRT-IT.

When the receiving apparatus accesses the FLUTE session to acquire content, capabilities_descriptor as in the following Table 1 is defined in the ATSC NRT so as to download only the content that can be supported in the receiving apparatus and perform a service. The capabilities_descriptor may describe a protocol, a compression algorithm, a media type, or the like, that is to be supported in the receiving apparatus for the NRT service or the content item.

**[Table 1]**

| Capabilities_descriptor () { | | |
|---|---|---|
| | descriptor_tag | bit (8) |
| | d scriptor_length | bit (8) |
| | capability code_count | bit (8) |
| | for (i=0; i<capability_code_count; i++) { | |
| | essential_indicator | bit (1) |
| | capability_code | bit(7) |
| | if (capability_code> 0x6F) { | |
| | format_identifier | bit (32) |
| | } | |
| | } | |
| | capability_string_count | bit (8) |
| | for (i=0; i<capability_string_count; i++) { | |
| | essential_indicator | bit (1) |
| | capability_category_code | bit (7) |
| | ... | |
| | } | |
| | } | |

For the NRT stereoscopic broadcast service, the apparatus for receiving 2D NRT broadcasting can signal the 3D content, that is, the transmitted content and thus, prevent the download of the 3D content. Therefore, according to the exemplary embodiment of the present invention, the SMT may include a stereoscopic services category including a service compatible code or a frame compatible code, which is included in capabilities_descriptor.

Describing in more detail, the SMT according to the exemplary embodiment of the present invention may further include a stereoscopic services category as a capability category for 3D service signaling in the capabilities_descriptor. In addition, the service compatible code or the frame compatible code may be described so as to signal the 3D content composition information as a sub-information of the stereoscopic services category.

The NRT stereoscopic broadcasting service content may be transmitted using a stereoscopic video application format (SVAF) that is a format for storing and playing, for example, a stereoscopic video. Therefore, the SMT may include a code for signaling the SVAF for storing and playing a stereoscopic video. In more detail, a code for signaling the SVAF may further include a wrapper/archive format category.

The following Table 2 is an exemplary embodiment that extends and defines the capability code of the ATSC NRT for signaling the program stand-alone 3D NRT content.

**[Table 2]**

| **Wrapper/Archive Formats** | |
|---|---|
| 0x20 | MP4 multimedia container format. |
| 0x21 | ZIP format, as specified in this Standard. |
| *0x22* | *SVAF* |
| 0x23-0x2F | Reserved for future ATSC use. |

| **Compression Algorithms** | |
|---|---|
| 0x30 | DEFLATE algorithm; as specified in this Standard. |
| 0x31-0x3F | Reserved for future ATSC use. |

| **Media Types** | |
|---|---|
| 0x41 | AVC video per A/72 up to level 4.0 (level_idc<=40). |
| 0x42 | AVC video per A/72 up to level 4.2 (level_idc<=42). |
| 0x43 | AC-3 audio per A/53 Part 5 |
| 0x44 | E-AC-3 audio per A/52 |
| 0x4D-0x6F | Reserved for future ATSC use. |

| **Stereoscopic Services** | |
|---|---|
| *0x70* | *Service Compatible* |
| *0x71* | *Frame Compatible* |
| 0x72-0x7F | Available for private use. |
| ... | |

As shown in Table 2, a code 0 x 22 for signaling the SVAF may be further included in a wrapper/archive formats category. In addition, a stereoscopic services category including the service compatible (0 x 70) code and the frame compatible code (0 x 71) may be further included in the capabilities service code.

For describing composition of the 3D content, left and right image division and relation, or the like, PushVoD_SC_descriptor may be defined. That is, the NRT-IT may include the PushVoD_SC_descriptor indicating that the transmitted content are the stereoscopic based content. The PushVoD_SC_descriptor may be determiner that the transmitted NRT content are content for the stereoscopic based program stand-alone NRT broadcasting service, when content_descriptor of the NRT-IT may be described below and the PushVoD_SC_descriptor is described.

Further, it is possible to acquire the 3D content composition information (composition type, reference image information, left image information, or the like) based on the PushVoD_SC_descriptor.

The following Table 3 is an example of the PushVoD_StereoseopicContent_descriptor.

**[Table 3]**

| syntax | | | bit |
|---|---|---|---|
| PushVoD_SC_descriptor () { | | | |
| descriptor_tag | | | bit (8) |
| descriptor_length | | | bit (8) |
| CompositionType | | | bit (3) |
| | LR_first | | bit (1) |
| | If Composition Type == Dual ES ) | | |
| | { | | bit(32) |
| | | L_trackID | |
| | } | | |
| } | | | |

As shown in Table 3, for example, the PushVoD_StereoscopicContent_descriptor may include compositionType that indicates a composition scheme of the reference image and the additional image of the stereoscopic content. That is, information regarding a scheme of composing the reference image and the additional image of the received 3D content such as side-by-side, top-and-bottom, or a dual elementary stream (Dual ES), or the like, may be signaled.

Further, the PushVoD_StereoscopicContent_descriptor may include LR_first that indicates any one of the left image and the right image as a reference image. That is, as a field for informing whether the reference image is a left image and a right image, when the value of the field is 1, the left image may be considered to be the reference image and when the value of the field is 0, the right image may be considered to be the reference image.

In addition, the PushVoD_StereoscopicContent_deseriptor may include L_trackID for indicating a track corresponding to the left image when the stereoscopic content are composed as the dual stream type. That is, when the compositionType is configured as the Dual ES type, the PushVoD_StereoscopicContent_descriptor may include a field for specifying TrackID corresponding to the left image among the tracks of the file. The track that does not correspond to the left image may be recognized as the right image.

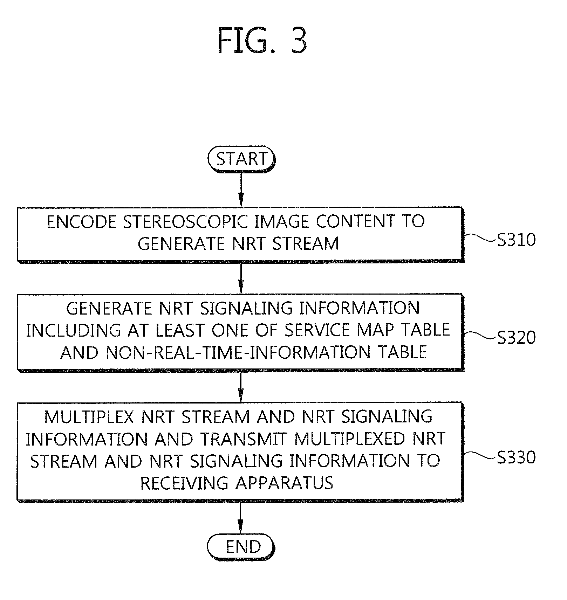

FIG. 3 is a flow chart of a method for transmitting an NRT stereoscopic broadcasting service in accordance with the exemplary embodiment of the present invention.

As shown in FIG. 3, a method for transmitting NRT stereoscopic broadcasting according to an exemplary embodiment of the present invention first encodes the stereoscopic image content including the reference image and the additional image to generate the NRT stream (S310). Then, the NRT signaling information including at least one of the SMT and the NRT-IT that correspond to the content is generated (S320). When the generation of the NRT stream and the NRT signaling information is completed, the NRT stream and the NRT signaling information may be multiplexed and may be transmitted to the receiving apparatus (S330).

The detailed composition of the NRT signaling information used in the method for transmitting NRT stereoscopic broadcasting according to the exemplary embodiment of the present invention is the same as that of the broadcasting transmitting apparatus.

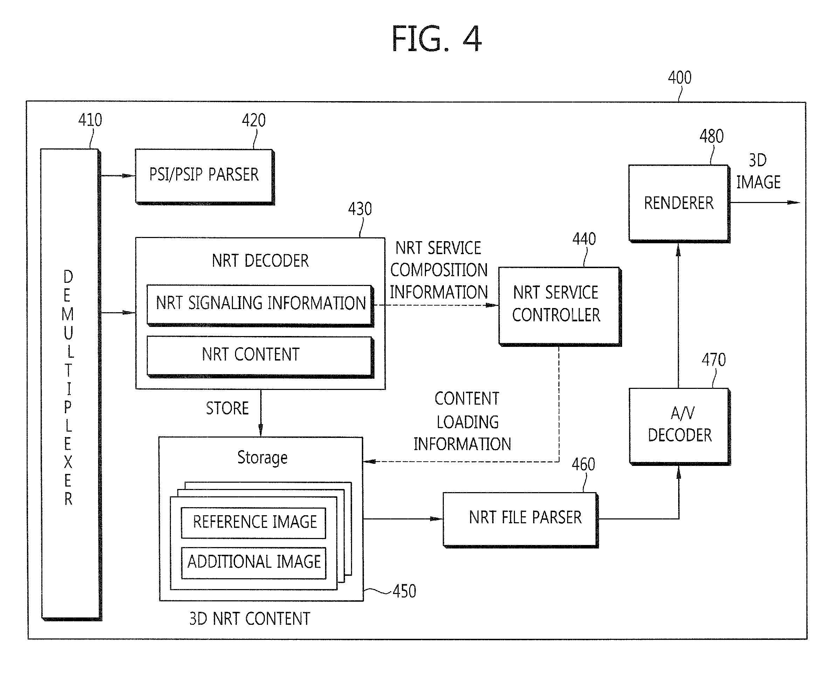

FIG. 4 is a block diagram showing a configuration of an apparatus for receiving an NRT stereoscopic broadcasting service in accordance with an exemplary embodiment of the present invention.

As shown in FIG. 4, an apparatus 400 for receiving an NRT stereoscopic broadcasting service according to an exemplary embodiment of the present invention may further include an NRT decoder, an NRT file parser, and an NRT service controller in addition to components of the receiving apparatus used for receiving the existing broadcasting. The receiving apparatus 400 may receive and store content reserved by a user through a push VOD service that is the NRT stereoscopic broadcasting and may store the stored content according to the selection of the user.

A demultiplexer 410 receives and demultiplexes the broadcasting signal to transmit a real-time stream to a PSI/PSIP parser and transmit an NRT stream to an NRT decoder 430.

The PSI/PSIP parser 420 may parse TVCT of the real-time stream to extract the PSI or the PSIP and determine whether the content for the program stand-alone NRT service are transmitted and acquire information regarding PID that transmits the program stand-alone NRT service.

The NRT decoder 430 may decode the broadcasting signal including the NRT stream and the NRT signaling information to acquire the NRT content and the NRT signaling information. In this case, the NRT content may be the stereoscopic NRT content including the reference image and the additional image. Further, the NRT signaling information may include at least one of the SMT and the NRT-IT. In addition, the NRT stream may be characterized in that the reference image and the additional image are encoded with the single file format in the dual stream type.

In more detail, the broadcasting signal may be characterized in that the content are encoded with the file delivery over unidirectional transport (FLUTE) standard. Therefore, the NRT decoder 430 may decode the FLUTE packet transmitted to the DSMCC-addressable section to acquire the NRT signaling information and the NRT content. As described above, the NRT signaling information may include at least one of the SMT and the NRT-IT and the NRT service composition information acquired through the SMT or the NRT-IT is transmitted to the NRT service controller 440.

The NRT content may be composed as the file of the SVAF for storing and playing the stereoscopic video and when content are content previously reserved by a user, the corresponding content may be stored in the storage 450 in the receiving apparatus 400. That is, the storage 450 may store the NRT content when the NRT content are previously reserved by a user. A format of the NRT content is not limited to the SVAF and may configure a field that can differentiate a kind of files in consideration of diversity of a file format type.

The NRT service controller 440 may perform a control to play the NRT content based on the NRT signaling information when a user selects the service play. In more detail, when the NRT service controller 440 loads the NRT content stored in the storage 450, the NRT file parser 460 parses the loaded NRT content file to split the reference image and the additional image and transfer the split reference image and additional image to the A/V decoder 470. The A/V decoder 470 may decode the reference image and the additional image and then, transmit the decoded reference image and additional image to a renderer 480, such that a user can view the images.

The composition of the NRT signaling information including at least one of the SMT and the NRT-IT that are used in the apparatus for receiving an NRT broadcasting service according to the exemplary embodiment of the present invention is the same as that of the above-mentioned broadcasting transmitting apparatus.

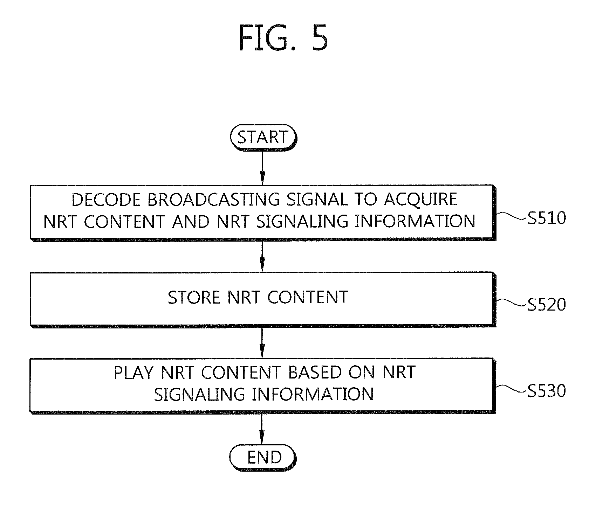

FIG. 5 is a flow chart of a method for receiving an NRT stereoscopic broadcasting service in accordance with the exemplary embodiment of the present invention.

As shown in FIG. 5, a method for receiving an NRT stereoscopic broadcasting service according to an exemplary embodiment of the present invention first decodes the broadcasting signal including the NRT stream and the NRT signaling information to acquire the NRT content and the NRT signaling information (S510). In this case, the NRT content may be the stereoscopic NRT content including the reference image and the additional image. Further, the NRT signaling information may include at least one of the SMT and the NRT-IT.

Thereafter, when the NRT content are previously reserved by the user, the NRT content may be stored in the storage. It is possible to perform a control to play the stored NRT content based on the NRT signaling information by the selection of the user. In more detail, the stored NRT content are loaded to parse the reference image and the additional image and the parsed reference image and additional image are decoded and rendered, such that a user can view the images.

### (Example)

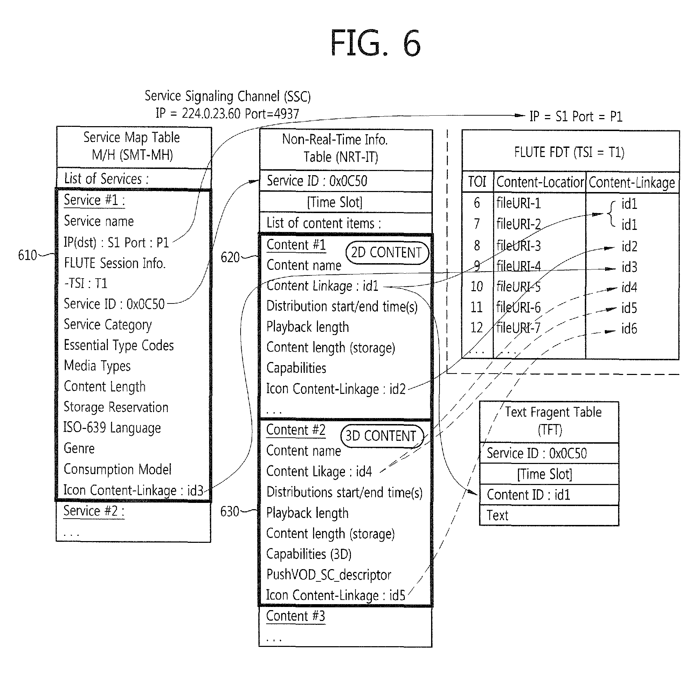

FIG. 6 is a configuration diagram of an example of a signaling scheme for providing an NRT stereoscopic broadcasting service.

Referring to FIG. 6, Service#1 610 serves 2D content#1 620 and 3D content#2 630 together and the information regarding files configuring the Service#1 610 is transmitted to IP S1 and Port P1. Here, the files for composing the 3D content is files of TOI = 10 and TOI = 11 having id4 that is a content-linkage value corresponding to the Content#2 630 and TOI = 12 is an icon file of the Content#2 630.

The existing 2D receiving apparatus determines that the corresponding content are content for the 3D receiving apparatus by looking the capability code value of the Cotent#2 630 so as not to download the content and can also disregard the PushVOD_SC_descriptor that is a descriptor that is not recognized in the existing 2D receiving apparatus.

When the 3D capabilities receiving apparatus accesses the FLUTE session to acquire the content, TOI = 10, TOI = 11, and TOI = 12 may be recognized as the file for composing the 3D and may be downloaded and stored. Further, the 3D receiving apparatus uses the content file received through the FLUTE session based on the content of the PushVOD_SC_descriptor to acquire the information for composing the 3D service and provide the 3D service to the user.

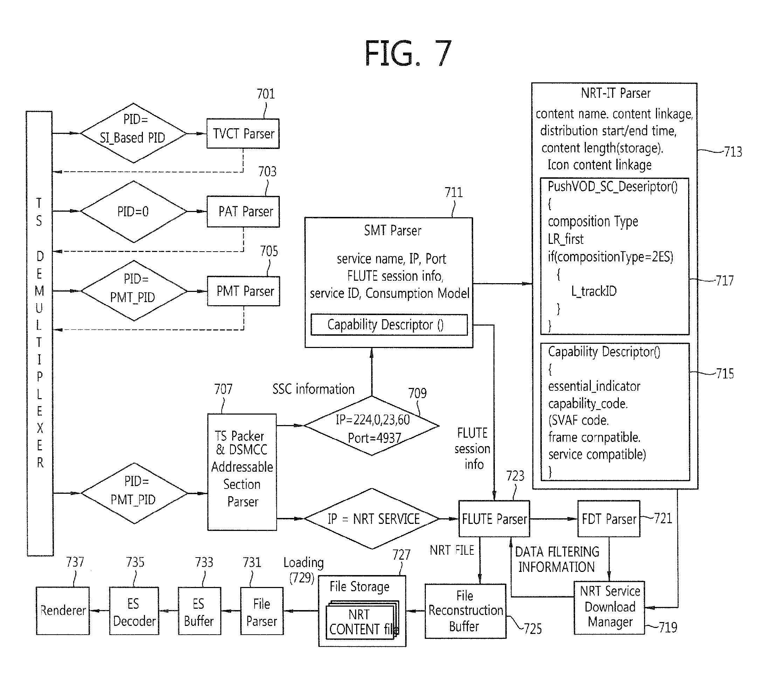

FIG. 7 is a flow chart of a method for receiving non-real-time stereoscopic broadcasting service in accordance with the exemplary embodiment of the present invention.

As shown in FIG. 7, a TVCT parser 701 based on the broadcast signal split in the demultiplexer may confirm a service transmitted from the TVCT in non-real-time and may confirm channel_TSID and program_number of the NRT service channel. In addition, a PAT parser 703 may acquire a program association table (PAT) and a PMT parser 705 may acquire a program map table (PMT). The PMT confirms the PID transmitting the NRT service and receives a packet corresponding to the NRT service among TS packets. The received TS is TS-depacketized to parse a datagram composed of the DSMCC addressable section.

When the IP of the datagram is 224.0.23.60:4937, the IP is recognized as a service signaling channel (SSC) (709). Service association information, NRT-IT linkage information, and FLUTE session information, or the like, can be acquired by receiving tables transmitted to the SSC and parsing the SMT (711). Information for each content item, content linkage, information for downloading, descriptor information, or the like, can be acquired by acquiring the NRT-IT for the corresponding service through the SMT and parsing the NRT-IT.

It is possible to determine whether the receiving apparatus receives the content based on the capabilities code information within a capability descriptor 715 of the acquired NRT-IT content item. In this case, when the capability code for the 3D is present in the content item, the 3D capability receiving apparatus renders the corresponding content item as the receivable content according the content of the code (for example, the SVAF, the frame compatible, the service compatible, or the like) and the existing 2D receiving apparatus can disregard the corresponding content item. An NRT service manager 719 may configure an interface allowing a user to reserve a service based on the parsed content.

In addition, for composing the stereoscopic service, the composition type and the left and right image information that are information described within a PushVOD_StereoscopicContent_Desciptor 717 and information regarding the reference image can be acquired. As described above, the basic information for the content download acquired through the SMT and the NRT-IT and the information for stereoscopic composition may be transferred to an NRT service download manager 719.

The NRT service download manager 719 accesses the FLUTE session for download based on information transmitted from the NRT-IT parser 713 and FDT parsing content transmitted from an FDT parser 721 to acquire the content and download only the data necessary for composing the NRT service (723). The downloaded data is recomposed of a file 725 and the generated NRT content file may be stored in the storage 727. When the user selects the service use, the apparatus for receiving broadcasting content loads the files corresponding to the stored content from the storage device (729), parses the loaded file (731), and decodes the parsed file through an element stream (ES) buffer 733 in an ES decoder 735, thereby providing the stereoscopic 3D service to the user through a rendering process (737).

**[Detailed Description of Main Elements]**

| | | | |
|---|---|---|---|
| 110 : | ATSC DISTRIBTUION NETWORK | | |
| 120 : | STORAGE | | |
| 130 : | NRT DECODER | 140 : | 3D PROCESSOR |
| 150 : | 3D DISPLAY | | |
| 200 : | BROADCASTING TRANSMITTING APPARATUS | | |
| 201 : | BROADCASTING SERVER | | |
| 203 : | REAL-TIME BROADCASTING A./V ENCODER | | |
| 205 : | PSI/PSIP GENERATOR | | |
| 210 : | 3D NRT BROADCASTING UNIT | | |
| 211 : | NRT CONTENT ENCODER | | |
| 213 : | NRT SIGNALING INFORAMTION ENCODER | | |
| 215 : | STORAGE | 220 : | MULTIPLEXER |
| 400 : | BROADCASTING RECEIVING APPARATUS | | |
| 410 : | DEMULTIPLEXER | | |
| 420 : | PSI/PSIP PARSER | 430 : | NRT DECODER |
| 440 : | NRT SERVICE CONTROLLER | 450 : | STORAGE |
| 460 : | NRT FILE PARSER | 470 : | A/V DECODER |
| 480 : | RENDERER | | |

## Claims

1. An apparatus for transmitting a broadcasting service, comprising:
a non-real-time (NRT) content encoder encoding stereoscopic image content including a reference image and an additional image to generate an NRT stream;
an NRT signaling information encoder generating NRT signaling information including at least one of a service map table (SMT) and a non-real-time-information table (NRT-IT) that correspond to the content; and
a multiplexer multiplexing the NRT stream and the NRT signaling information and transmitting the multiplexed NRT stream and NRT signaling information to a receiving apparatus.

2. The apparatus of claim 1, wherein the NRT content encoder encodes the reference image and the additional image into a dual stream type.

3. The apparatus of claim 1, wherein the NRT content encoder encodes the content with a file delivery over unidirectional transport (FLUTE) standard.

4. The apparatus of claim 1, wherein the NRT signaling information is generated by including a stereoscopic services category including a service compatible code or a frame compatible code in capabilities_descriptor.

5. The apparatus of claim 1, wherein the NRT signaling information includes a code for signaling 3D content for storing and playing a stereoscopic video.

6. The apparatus of claim 1, wherein the NRT signaling information includes PushVoD_SC_descriptor indicating that the content are stereoscopic based content.

7. The apparatus of claim 6, wherein the PushVoD_SC_descriptor includes information indicating a scheme of composing the reference image and the additional image of the stereoscopic content.

8. The apparatus of claim 6, wherein the PushVoD_SC_descriptor includes information indicating any one of a left image and a right image as the reference image.

9. The apparatus of claim 6, wherein the PushVoD_SC_descriptor includes information indicating a track corresponding to the left image when the stereoscopic content are composed of a dual stream type.

10. A method for transmitting a broadcasting service, comprising:
encoding stereoscopic image content including a reference image and an additional image to generate an NRT stream;
generating NRT signaling information including at least one of a service map table (SMT) and a non-real-time-information table (NRT-IT) that correspond to the content ; and
multiplexing the NRT stream and the NRT signaling information and transmitting the multiplexed NRT stream and NRT signaling information to a receiving apparatus.

11. An apparatus for receiving a broadcasting service, comprising:
an NRT decoder decoding a broadcasting signal including an NRT stream and NRT signaling information to acquire NRT content and the NRT signaling information; and
an NRT service controller performing a control to play the NRT content based on the NRT signaling information,
wherein the NRT content are stereoscopic NRT content including a reference image and an additional image, and
the NRT signaling information includes at least one of a service map table (SMT) and a non-real-time-information table (NRT-IT).

12. The apparatus of claim 11, wherein the NRT stream is generated by encoding the reference image and the additional image into a dual stream type.

13. The apparatus of claim 11, wherein the broadcasting signal is generated by encoding the content with a file delivery over unidirectional transport (FLUTE) standard.

14. The apparatus of claim 11, wherein the NRT signaling information is generated by including a stereoscopic services category including a service compatible code or a frame compatible code in capabilities_descriptor.

15. The apparatus of claim 11, wherein the NRT signaling information includes a code for signaling a stereoscopic video application format (SVAF) for storing and playing a stereoscopic video.

16. The apparatus of claim 11, wherein the NRT signaling information includes PushVoD_SC_descriptor indicating that the content are stereoscopic based content.

17. The apparatus of claim 16, wherein the PushVoD_SC_descriptor includes information indicating a scheme of composing the reference image and the additional image of the stereoscopic content.

18. The apparatus of claim 16, wherein the PushVoD_SC_descriptor includes information indicating any one of a left image and a right image as the reference image.

19. The apparatus of claim 16, wherein the PushVoD_SC_descriptor includes information indicating a track corresponding to the left image when the stereoscopic content are composed of a dual stream type.

20. A method for receiving a broadcasting service, comprising:
decoding a broadcasting signal including a non-real-time (NRT) stream and NRT signaling information to acquire NRT content and the NRT signaling information; and
performing a control to play the NRT content based on the NRT signaling information,
wherein the NRT content are stereoscopic NRT content including a reference image and an additional image, and
the NRT signaling information includes at least one of a service map table (SMT) and a non-real-time-information table (NRT-IT).
